# FASCICULE DE BREVET EUROPEEN

(11) **EP 0 461 993 B1**
(45) Date de publication et mention de la délivrance du brevet: **06.04.1994**
(21) Numéro de dépôt: 91401541.7
(22) Date de dépôt: 11.06.1991
(51) Int. Cl.: G01P 1/04

(54) **Capteur de mesure de vitesse de rotation, notamment pour boîte de vitesses de véhicule automobile**
Drehgeschwindigkeitsmessaufnehmer, insbesondere für ein Kraftfahrzeuggetriebe
Sensor for measuring rotational speed, in particular for a motor vehicle gearbox

(30) Priorité: 14.06.1990 FR 9007398
(43) Date de publication de la demande: 18.12.1991
(73) Titulaire: SAGEM ALLUMAGE, F-75783 Paris Cédex 16 (FR)
(72) Inventeur: Badaud, Eric, F-63550 St-Remy-sur-Durolle (FR)
(74) Mandataire: Bloch, Gérard

(56) Documents cités:
- DE-A- 2 343 480
- FR-A- 2 604 527
- US-A- 4 221 985

## Description

La présente invention se rapporte d'une manière générale à un capteur de mesure de vitesse de rotation tel que ceux utilisés par exemple pour mesurer la vitesse de rotation sur une boîte de vitesses d'un véhicule automobile.

Un tel capteur comprend un corps avec des moyens permettant sa fixation, et à l'intérieur duquel tourillonne un arbre dont l'une des extrémités faisant saillie par rapport audit corps vient s'enclencher dans l'organe dont il faut mesurer la vitesse.

A l'intérieur du corps est positionnée une plaque comprenant sur l'une de ses faces un organe de détection de rotation et sur l'autre face un circuit électronique dont le rôle est de mettre en forme et transmettre à distance les signaux mesurés.

L'organe de détection qui est fixe se trouve en vis-à-vis, par exemple, d'aimants permanents répartis angulairement de matière uniforme et rendus solidaires par tout moyen approprié de l'arbre tournant.

Un tel capteur est divulgué par le document US-A-4 221 985.

Un capteur de ce type ainsi équipé permet une mesure très précise de la vitesse de rotation d'une boîte de vitesses d'un véhicule automobile et les signaux électriques correspondant à cette mesure sont envoyés en général à un microprocesseur chargé de gérer de manière automatique l'ensemble du fonctionnement de la boîte de vitesses.

De tels signaux ne sont pas en général directement exploitables pour retransmettre au tableau de bord l'information vitesse qui doit être lue par le conducteur du véhicule.

Dans la plupart des cas, les véhicules sont encore équipés de tableaux de bord dont le compteur de vitesse traite l'information de manière analogique c'est-à-dire par déplacement angulaire d'une aiguille devant un cadran gradué. Un tel compteur de vitesse est équipé d'un câble tournant dont l'une des extrémités vient s'enclencher dans un logement prévu à cet effet dans la boîte de vitesses.

Lorsqu'un capteur de mesure du type décrit ci-dessus est installé sur un véhicule, il est souhaitable que l'arbre dont il est équipé présente la possibilité de retransmettre à distance l'information vitesse mécaniquement, par exemple avec un câble tel que défini plus haut pour éviter d'avoir deux prises d'information distinctes sur la boîte de vitesses.

Il en résulte que l'arbre d'un tel capteur doit présenter des fonctionnalités multiples qui compliquent inévitablement sa conception et donc son coût.

En effet, non seulement un tel arbre doit constituer une prise d'information mais doit pouvoir également retransmettre mécaniquement ladite information, ce qui nécessite de ménager à l'une de ses extrémités un logement apte à recevoir l'extrémité du câble, cette extrémité devant présenter une rigidité mécanique suffisante pour encaisser les efforts auxquels elle est soumise. Par ailleurs les aimants permanents doivent être rendus solidaires de l'arbre et l'ensemble ainsi constitué doit également présenter une rigidité mécanique parfaite, en particulier à vitesse de rotation élevée, de manière à ce que la lecture faite par l'organe de détection soit fiable. Enfin l'arbre et le corps doivent présenter respectivement des portées de guidage de roulement obligatoirement métalliques de manière à éviter toute usure prématurée de celles-ci.

L'une des solutions envisagées pour la fabrication d'un tel arbre est de le réaliser en métal pour lui donner, de par sa nature même, une rigidité mécanique suffisante. Si cette solution résoud le problème des portées de guidage de roulement, elle présente cependant divers inconvénients. D'une part la complexité des formes d'un tel arbre rend sa réalisation sous forme monobloc impossible, d'autre part, la fixation des aimants nécessite l'apport de pièces et d'opérations complémentaires qui augmentent son coût de manière prohibitive.

Une autre solution est de concevoir l'arbre de manière monobloc par moulage de matière plastique. La réalisation de ses formes complexes est alors rendue possible et la solidarisation des aimants permanents peut se faire par simple surmoulage de ceux-ci. Mais cette solution ne résoud en rien la rigidité mécanique demandée et complique la conception des portées de guidage de roulement.

La présente invention résoud ces problèmes et propose à cet effet un capteur de mesure de vitesse de rotation, notamment pour boîte de vitesses de véhicule automobile comprenant notamment un corps fermé à l'une de ses extrémités par un bouchon à l'intérieur desquels tourillonne un arbre réalisé de manière monobloc en matière plastique et présentant une partie pleine constituant la prise d'information de la vitesse de rotation à mesurer et une seconde partie tubulaire comportant notamment, ménagés de matière, une couronne dans laquelle sont fixés par surmoulage des aimants permanents et un logement, ledit logement coopérant avec un moyen mécanique de retransmission à distance de la vitesse de rotation, caractérisé en ce que la seconde partie tubulaire de l'arbre comporte des armatures métalliques rendues solidaires de l'arbre par surmoulage.

De manière préférentielle les armatures métalliques sont constituées de tubes métalliques.

Sur une partie de leur longueur, les armatures métalliques coopèrent avec des bagues fixées respectivement sur le corps et le bouchon, constituant ainsi les portées de guidage en rotation de l'arbre.

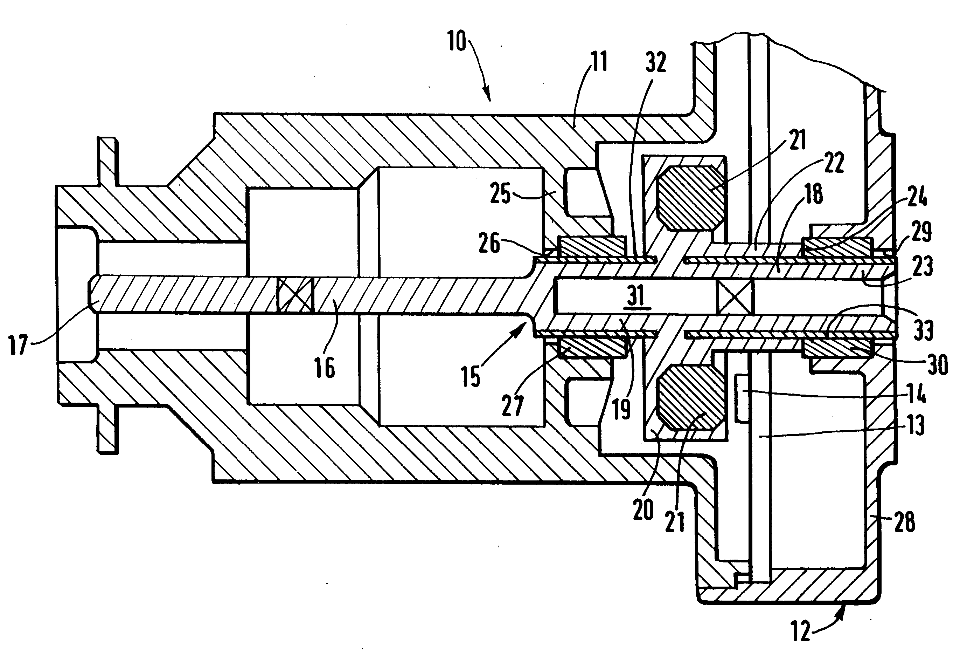

L'invention sera mieux comprise avec la description qui va suivre en regard du dessin annexé, la figure 1 étant une coupe longitudinale à grande échelle d'un capteur équipé suivant l'invention.

L'ensemble du capteur 10 comporte notamment un corps 11 de forme générale tubulaire fermé à l'une de ses extrémités par un bouchon 12 également de forme générale tubulaire. On notera que pour simplifier le dessin, on a représenté partiellement le corps 11 et le bouchon 12.

A l'intérieur du corps 11 est positionnée une plaque 13 sur l'une des faces de laquelle est fixé un organe de détection 14. A cette plaque 13 est incorporé un dispositif électronique nécessaire au traitement et à la transmission à distance des signaux mesurés. Ce dispositif ne faisant pas partie de la présente invention n'a pas été représenté.

A l'intérieur du corps 11 tourillonne un arbre 15 réalisé de manière monobloc par moulage en matière plastique.

Cet arbre 15 comporte une première partie pleine 16 de section carrée dont l'extrémité 17 vient s'enclencher dans un logement prévu à cet effet, par exemple, dans une boîte de vitesses (non représentée) d'un véhicule automobile. Cette première partie 16 constitue ainsi la prise d'information de la vitesse de rotation à mesurer.

L'arbre 15 comprend une seconde partie 18 de forme générale tubulaire. Cette seconde partie 18 présente en prolongement de la première partie 16, une première partie cylindrique 19 raccordée à une couronne 20 dans laquelle sont surmoulés des aimants permanents 21 qui se trouvent ainsi en vis-à-vis de l'organe de détection 14. Ces aimants permanents 21 sont répartis angulairement de manière uniforme et sont alternativement de polarités Nord et Sud.

La plaque 13 et son dispositif électronique, l'organe de détection 14 et les aimants permanents 21 constituent ainsi un ensemble capable de mesurer avec une grande précision la vitesse de rotation et de transmettre à distance les résultats de cette mesure vers, par exemple, un microprocesseur chargé de gérer de manière automatique l'ensemble du fonctionnement de la boîte de vitesses sur laquelle le capteur 10 est monté.

La couronne 20 se raccorde du côté opposé à la première partie cylindrique 19 par une portion cylindrique 22 prolongée par une seconde partie cylindrique 23.

Dans l'exemple représenté, les parties cylindriques 19,23 sont de même diamètre et la portion 22 présente un plus grand diamètre de manière à former à son raccordement avec la partie cylindrique un épaulement ou butée 24.

Au droit de la première partie cylindrique 19 de l'arbre 15 est ménagé de matière avec le corps 11 un flasque 25 comportant dans sa partie centrale un alésage épaulé 26 dans lequel est fixé, par exemple par surmoulage, une bague frittée 27.

Au droit de la seconde partie cylindrique 23 est ménagé au centre de la paroi extérieure 28 du bouchon 12 un alésage épaulé 29 dans lequel est fixé, par exemple par surmoulage une bague frittée 30.

Sur la presque totalité de la longueur de la seconde partie 18 de l'arbre 15 est ménagé de matière à l'intérieur de celle-ci un logement 31 de section carrée.

Ce logement 31 est destiné à recevoir l'extrémité d'un câble tournant (non représenté) dont l'autre extrémité est reliée au compteur de vitesse du tableau de bord du véhicule automobile.

La seconde partie 18 de l'arbre 15 et son logement 31 associé constituent ainsi un ensemble permettant de retransmettre mécaniquement à distance la vitesse mesurée.

Du fait de sa conception, cette seconde partie 18 présente une rigidité mécanique relativement faible. En effet il faut rappeler que l'ensemble de l'arbre 15 dont elle fait partie est réalisé en matière plastique et que la figure 1 le reproduit à grande échelle.

En réalité l'épaisseur des parois au droit des parties cylindriques 19 et 23 n'est que de deux millimètres environ, ce qui est insuffisant pour absorber en continu les efforts mécaniques dus à la retransmission par câble sans subir de déformation.

De plus, l'arbre 15 doit être guidé en rotation à l'intérieur du corps 11 par les bagues frittées 27 et 30.

Ces bagues 27 et 30 ne peuvent être en contact direct avec la matière plastique de l'arbre 15, car il en résulterait une usure rapide de celle-ci et par conséquent un mauvais fonctionnement de l'ensemble du capteur 10.

Pour remédier à ces inconvénients et suivant l'invention, on équipe l'arbre 15 par surmoulage de deux armatures métalliques 32,33. Ces armatures métalliques 32,33 de préférence constituées de tubes métalliques sont largement ancrées dans l'arbre 15 jusqu'au droit de la couronne 20 et affleurent à la surface dudit arbre 15, au droit des parties 19 et 23 de manière à constituer avec les bagues frittées 27 et 30 les portées de guidage en rotation de l'arbre 15 dans le corps 11.

On réalise ainsi pour un tel capteur 10 un arbre monobloc 15 présentant toutes les caractéristiques mécaniques exigées pour une utilisation intensive.

La présente invention ne se limite pas à l'exemple de réalisation décrit ci-dessus et représentée sur le dessin.

## Revendications

1. Capteur de mesure de vitesse de rotation, notamment pour boîte de vitesses de véhicule automobile, comprenant notamment un corps (11) fermé à l'une de ses extrémités par un bouchon (12) à l'intérieur desquels tourillonne un arbre (15) réalisé de manière monobloc en matière plastique et présentant une première partie pleine (16) constituant la prise d'information de la vitesse de rotation à mesurer et une seconde partie tubulaire (18) comportant notamment, ménagés de matière, une couronne (19) dans laquelle sont fixés par surmoulage des aimants permanents (21) et un logement (31), ledit logement (31) coopérant avec un moyen mécanique de retransmission à distance de la vitesse de rotation, caractérisé en ce que la seconde partie tubulaire (18) de l'arbre (15) comporte des armatures métalliques (32,33) rendues solidaires de l'arbre (15) par surmoulage.

2. Capteur de mesure selon la revendication 1, caractérisé en ce que les armatures métalliques (32,33) sont constituées de tubes métalliques.

3. Capteur de mesure suivant l'une quelconque des revendications précédentes, caractérisé en ce que les armatures métalliques (32,33) coopèrent sur une partie de leur longueur avec des bagues (27,30) constituant ainsi les portées de guidage en rotation de l'arbre (15) dans le corps (11) et le bouchon (12).

## Patentansprüche

1. Drehgeschwindigkeitsmeßaufnehmer, insbesondere für ein Kraftfahrzeuggetriebe, umfassend einen Körper (11), der an einem seiner Enden durch einen Deckel (12) verschlossen ist und in dessen Innern sich eine Welle (15) dreht, die in einstückiger Weise aus Kunststoff gefertigt ist und einen ersten, massiven Teil (16) aufweist, der den Informationsaufnehmer für die zu messende Drehgeschwindigkeit darstellt, sowie einen zweiten, röhrenförmigen Teil (18), der insbesondere einen aus dem Material geformten Kranz (19), in dem Dauermagneten (21) angeordnet sind, und eine Aussparung (31) aufweist, wobei die Aussparung (31) mit einem mechanischen Mittel zur Fernübertragung der Drehgeschwindigkeit zusammenwirkt, dadurch gekennzeichnet, daß der zweite, röhrenförmige Teil (18) der Welle (15) Metallbewehrungen (32, 33) besitzt, die mit der Welle (15) fest verbunden sind, indem sie in dieser angeordnet sind.

2. Meßaufnehmer nach Anspruch 1, dadurch gekennzeichnet, daß die Metallbewehrungen (32, 33) aus Metallröhren bestehen.

3. Meßaufnehmer nach einem der vorhergehenden Ansprüche, dadurch gekennzeichnet, daß die Metallbewehrungen (32, 33) auf einem Teil ihrer Länge mit Ringen (27, 30) zusammenwirken, die so die Führungsflächen bei der Drehung der Welle (15) in dem Körper (11) und dem Deckel (12) bilden.

## Claims

1. Sensor for measuring a speed of rotation, in particular for a motor vehicle gear box, comprising in particular a body (11) closed at one of its ends by a plug (12) inside which rotates a shaft (15) produced in one piece from plastics material and having a first solid part (16) constituting the input of information relating to the speed of rotation to be measured and a second tubular part (18) comprising in particular, integral therewith, a ring (19) in which are fixed by overmoulding permanent magnets (21) and a housing (31), said housing (31) cooperating with mechanical means for remote retransmission of the speed of rotation, characterised in that the second tubular part (18) of the shaft (15) comprises metal armatures (32, 33) rendered integral with the shaft (15) by overmoulding.

2. Measuring sensor according to Claim 1, characterised in that the metal armatures (32, 33) are constituted by metal tubes.

3. Measuring sensor according to one of the preceding Claims, characterised in that the metal armatures (32, 33) cooperate over a part of their length with rings (27, 30) thus constituting bearings for guidance during rotation of the shaft (15) in the body (11) and the plug (12).
